# EUROPÄISCHE PATENTSCHRIFT

(11) **EP 2 712 664 B1**
(45) Veröffentlichungstag und Bekanntmachung des Hinweises auf die Patenterteilung: **31.05.2017**
(21) Anmeldenummer: 13005540.3
(22) Anmeldetag: 22.10.2010
(51) Int. Cl.: B01D 33/04, B01D 33/46

(54) **Filtrationsvorrichtung**
Filtration device
Dispositif de filtration

(43) Veröffentlichungstag der Anmeldung: 02.04.2014
(62) Teilanmeldung aus: 10768884.8
(73) Patentinhaber: Gala Industries, Inc., Virginia 24085 (US)
(72) Erfinder: Eloo, Michael, 46509 Xanten (DE); Rosengärtner, André, 46399 Bocholt (DE)
(74) Vertreter: Thoma, Michael

(56) Entgegenhaltungen:
- EP-A1- 1 762 291
- DE-A1- 3 926 434
- DE-A1- 10 252 679
- DE-U1- 9 402 095
- DE-U1- 20 008 957
- US-A- 4 485 013

## Beschreibung

Die vorliegende Erfindung betrifft eine Filtrationsvorrichtung zum Ausfiltern und Separieren von Feststoffen aus Flüssigkeiten, mit zumindest einem flüssigkeitsdurchlässigen, kontinuierlich oder intermittierend antreibbaren Filterband, einem Einlauf zur Aufgabe des zu filtrierenden Flüssigkeits-/Feststoffgemisches auf das Filterband in einem Aufgabebereich, sowie einem Bandreiniger zur Entfernung der am Filterband angelagerten Feststoffe von einem aus dem Aufgabebereich herausgeförderten Bandabschnitt in einem Abwurfbereich.

Aus der Schrift DE 101 54 134 A1 ist eine Granuliervorrichtung bekannt, deren Prozessflüssigkeit in Form eines flüssigen Kühlmittels im Kreislauf durch einen Partikelfilter geführt wird, um beim Pelletieren bzw. Granulieren in die Prozessflüssigkeit gelangende Verunreinigungen aus der Prozessflüssigkeit auszufiltrieren und zu separieren. Als Partikelfilter ist dabei ein nach Art eines Förderbands endlos umlaufendes Filterband vorgesehen, auf das die zu filtrierende, verunreinigte Prozessflüssigkeit aufgegeben wird, so dass die Flüssigkeit durch das Obertrum und Untertrum des Filterbandes hindurchläuft und Partikel auf dem Filterband gesammelt werden. Die auf dem Band gesammelten Verunreinigungen werden wegtransportiert und mit einem Abstreifer in einem Abwurfbereich kontinuierlich vom Band entfernt.

Die Verwendung von kontinuierlich oder intermittierend antreibbaren Filterbändern zum Filtrieren von verunreinigten Flüssigkeiten ist insbesondere bei Industrieanlagen vorteilhaft, bei denen Prozessflüssigkeit im Kreislauf geführt wird, da zum Reinigen des Filters die Anlage nicht angehalten zu werden braucht. Die sich im Aufgabebereich auf dem Filterband anlagernden Feststoffe werden durch die Bewegung des Filterbands aus dem Aufgabebereich herausgeführt, so dass sie in einem Abwurfbereich, der außerhalb des genannten Aufgabebereiches liegt, vom Filterband entfernt werden können. Gleichzeitig wird durch die Bewegung des Filterbands ein frischer oder gereinigter Filterbandabschnitt neu in den Aufgabebereich hineingefahren, so dass dort immer ein frischer, funktionsfähiger Filterbandabschnitt die Filtration ausführt.

Die bislang bekannten Filtrationsvorrichtungen dieser Gattung sind jedoch in mehrerer Hinsicht dennoch verbesserungsbedürftig. Ein Problem betrifft hierbei die Reinigung und Wartung des Filterbandes. Die sich bei der Vorrichtung gemäß DE 101 54 134 A1 sowohl am Obertrum als auch am Untertrum des Filterbands ansammelnden Feststoffe können nicht ohne weiteres entfernt werden, bevor das jeweilige Trum des Filterbandes um die im Inneren der Filtriervorrichtung liegende Umlenkrolle geführt wird, da ein Filterbandabschnitt nicht erst in den Abwurfbereich über den dort angeordneten Abstreifer geführt wird, bevor der entsprechende Filterbandabschnitt im Inneren der Filtriervorrichtung vom Untertrum zum Obertrum bzw. - je nach Drehrichtung - vom Obertrum zum Untertrum wird. Hierdurch werden nicht nur die am Filterband angelagerten Feststoffe um die im Inneren der Filtriervorrichtung liegende Umlenkrolle geführt, was zur Verfestigung, aber auch zu Verschleiß an Band und Umlenkrolle führt, sondern auch der schon im Untertrum mit Feststoffen belegte Filterbandabschnitt im Obertrum erneut zur Filtrierung verwendet, ohne zuvor gereinigt worden zu sein.

Aus der Schrift US 4,485,013 ist ein Wasserfilter bekannt, der nach Art eines Flo-ßes schwimmend ausgebildet und auf einem Gewässer einsetzbar ist. Dabei wird das zu reinigende Wasser über stufenförmig ausgebildete Konen auf ein antreibbares Filterband gegeben, wobei die am Filterband hängenbleibenden Partikel mittels einer Bürste abgereinigt werden, die am Untertrum des Filterbands angreift. Dabei ist der Bürste eine Rakel zugeordnet, um die Bürste zu reinigen.

Weitere Filtereinrichtungen sind aus den Schriften EP 17 62 291 A1, DE 102 52 679 A1, DE 200 08 957 U1, DE 94 02 095 U1 oder DE 39 26 434 A1 bekannt.

Ferner können sich bei der Abreinigung des Filterbands im Abwurfbereich Probleme ergeben, die separate Reinigungsmaßnahmen und damit einen Stillstand der Filtrationsvorrichtung erfordern. Zum einen kann dies daran liegen, dass sich am Filterband verfestigte Ablagerungen nicht vollständig abstreifen lassen und bei wiederholtem Umlauf des Filterbands immer stärker anhäufen, so dass sich das Filterband zusetzt. Zum anderen können sich aber auch an dem Abstreifer die vom Filterband entfernten Feststoffe anlagern, so dass sich dort eine Anhäufung ergeben kann, die einen Wartungsstillstand der Filtrationsvorrichtung erfordert.

Bei derartigen Wartungsstillständen ist das Handling solcher Filtrationsvorrichtungen mit einem umlaufenden Filterband bislang deutlich aufwändiger als bei stationären Kantenspaltfiltern. Muss beispielsweise das Filterband komplett gewechselt werden, ist der Ausbau der Filtrationsvorrichtung deutlich aufwändiger, da zumindest für den Einbau eines neuen endlos umlaufenden Filterbandes auch die Umlenkrolle im Inneren der Filtriervorrichtung auszubauen ist, wenn nicht nachträglich, d.h. nach Einfädeln eines endlichen Filterbands dessen Enden miteinander verbunden werden sollen.

Hiervon ausgehend liegt der vorliegenden Erfindung die Aufgabe zugrunde, eine verbesserte Filtrationsvorrichtung der genannten Art zu schaffen, die Nachteile des Standes der Technik vermeidet und Letzteren in vorteilhafter Weise weiterbildet. Vorzugsweise sollen längere Betriebszyklen mit weniger und kürzeren Wartungsstillstandzeiten erreicht werden, ohne die Filtrationseffizienz zu beeinträchtigen. Ferner soll vorzugsweise eine leichtere Wechselbarkeit des Filterbands ermöglicht werden, um Anpassungen der Filtrationsvorrichtung an verschiedene Prozessflüssigkeiten bzw. darin enthaltene Feststoffe vornehmen zu können.

Erfindungsgemäß wird diese Aufgabe durch eine Filtrationsvorrichtung nach Anspruch 1 gelöst. Bevorzugte Ausgestaltungen der Erfindung sind Gegenstand der abhängigen Ansprüche.

Um Stillstandszeiten sowie Beeinträchtigungen der Filtrationseffizienz durch sich bildende Feststoffanhäufungen im Bereich des Bandreinigers zu vermeiden, wird vorgeschlagen, zur Entfernung der am Filterband angelagerten Feststoffe eine Bürste zu verwenden, die selbstreinigend ausgebildet ist, so dass nicht nur eine dauerhaft wirksame Entfernung der Feststoffe vom Filterband gewährleistet ist, sondern auch Materialanhäufungen an der Reinigungsbürste und zu deren Entfernung erforderliche Stillstandszeiten vermieden werden. Erfindungsgemäß besitzt der Bandreiniger zumindest eine rotierend antreibbare Bürste, der ein Bürstenreiniger mit einem Abstreifer zugeordnet ist, der in der Umlaufbahn der Borsten der rotierenden Bürste angeordnet ist. Die rotierende Bürste entfernt effizient die angelagerten Feststoffe von dem Filterband, während der Abstreifer des Bürstenreinigers gleichzeitig dafür sorgt, dass sich die gelösten Feststoffe nicht an der Bürste festsetzen und diese zusetzen. Insbesondere bei klebrigen Verunreinigungen der zu filtrierenden Flüssigkeit ist die kontinuierliche Selbstreinigung der Bürste sehr hilfreich, um ein dauerhaft effizientes, kontinuierliches Abscheiden der Feststoffe sicherstellen zu können.

Der zur Selbstreinigung der rotierend antreibbaren Bürste verwendete Abstreifer kann grundsätzlich verschieden ausgebildet sein. Erfindungsgemäß ist der genannte Abstreifer als stabförmige Rakel ausgebildet, die vollständig in das Borstenfeld der Bürste eintauchend gehalten ist. Die Rakel kann sich hierbei parallel zur Drehachse der Bürste, ggf. auch unter einer leichten, spitzwinkligen Schiefstellung hierzu in einem Abstand von der Bürstendrehachse erstrecken, der kleiner ist als der Radius der Bürstenhüllfläche, so dass die Borsten der rotierenden Bürste auf ihrer Umlaufbahn immer wieder gegen die Rakel schlagen bzw. mit diesem zyklisch in Eingriff kommen.

Die genannte stabförmige Rakel kann hierbei im Betrieb feststehend angeordnet sein, d.h. in fester Position relativ zu der Bürste positioniert sein. Ist ein kreiszylindrischer Stab als Abstreifer vorgesehen, kann eine gänzlich starre, unbewegliche Anordnung vorgesehen sein.

Erfindungsgemäß kann die Position des Abstreifers relativ zur Bürste auch verändert werden, beispielsweise dahingehend, dass der Abstreifer näher auf die Achse der Bürste zustellbar oder weiter von dieser entfernbar ist, um eine einmal mehr und einmal weniger starke Abstreifwirkung zu erzielen bzw. je nach Abnutzung der Bürsten den Abstreifer nachstellen zu können. Erfindungsgemäß besitzt die Lagerung des Abstreifers auch eine Beweglichkeit dahingehend, dass der Abstreifer in verschiedenen Umfangssegmenten angeordnet werden kann, so dass der Abstreifvorgang an verschiedenen Stellen vorgenommen werden kann, beispielsweise um ein Zurückspritzen der abgestreiften Feststoffe auf das Filterband zu vermeiden. Erfindungsgemäß ist der Abstreifer für die Bürste auf der dem Filterband gegenüberliegenden Seite der Bürste angeordnet. Wenn der Eingriffspunkt der Bürste am Filterband die Winkellage 0° definiert, ist der Abstreifer in einem Winkelsegment zwischen 90° und 270° angeordnet, sozusagen also im zweiten und dritten Quadranten der Umlaufbewegung der Bürste. Dabei kann der Abstreifer etwa im Bereich 150° bis 210° angeordnet sein, um beim Abstreifen der Feststoffe von der Bürste sicher zu verhindern, dass diese auf das Filterband zurückgespritzt werden. Dabei ist durch entsprechend bewegliche Lagerung des Abstreifers die genannte Winkelposition des Abstreifers einstellbar, sodass das Abstreifen für verschiedene Feststoffe und Borstentypen optimal eingestellt werden kann.

In Weiterbildung der Erfindung kann die stabförmige Rakel auch einen von der Kreisform abweichenden Querschnitt besitzen, beispielsweise nach Art eines Strangprofils radial vortretende Stege aufweisen, drei- oder mehreckig konturiert sein oder ein Raster von zueinander versetzten Eingriffsvorsprüngen besitzen, insbesondere wenn die Rakel rotatorisch antreibbar ist, vorzugsweise gegenläufig zur Drehrichtung der Bürste, so dass die Eingriffswirkung zwischen Rakel und Borsten erhöht und eine verbesserte Entfernung der Feststoffe von den Borsten erreicht wird.

Alternativ zu strangpressförmigen Profilierungen des Abstreiferstabs kann dieser auch ein Profil mit einer sich in Längsrichtung ändernden Komponente besitzen, insbesondere in Form eines Schraubprofils oder einer schräg stehenden Riffelung, um eine Förderwirkung in Längsrichtung des Abstreifers zu erzielen. Hierdurch können beispielsweise in der Mitte der Bürste verstärkt anfallende Feststoffe beim Abstreifen über die Länge der Bürste vergleichmäßigt und zur Seite abgefördert werden. Beispielsweise kann die stabförmige Rakel hierzu eine Pfeilverzahnung oder -konturierung besitzen. Die genannten Schraub- oder Schrägprofilierungen können hierbei mit den zuvor genannten Strangpressprofilierungen überlagert sein.

Alternativ oder zusätzlich zu einem solchen Abstreifer in Form einer Rakel kann zur Selbstreinigung der Bürste auch eine zweite Bürste Verwendung finden, die vorteilhafterweise ebenfalls als rotatorisch antreibbare Bürste ausgebildet ist und um eine Drehachse drehbar ist, die sich im Wesentlichen parallel oder leicht schräg, spitzwinklig geneigt zu der Drehachse der ersten Bürste erstreckt. Vorteilhafterweise wird eine solche zweite Bürste gegenläufig zu der ersten Bürste angetrieben, um in der ersten Bürste anhaftende Feststoffe von dieser zu entfernen. In Weiterbildung der Erfindung kann wiederum der zweiten Bürste ein weiterer Bürstenreiniger zugeordnet sein, beispielsweise in Form eines Abstreifers wie zuvor beschrieben.

Um die Reinigung des Filterbandes optimal an verschiedene Prozessbedingungen anpassen zu können, besitzt die das Filterband abbürstende Bürste einen Antrieb mit variabler Drehzahl, so dass die Bürstendrehzahl veränderbar ist und auf den jeweils optimalen Wert eingestellt werden kann.

In Weiterbildung der Erfindung ist hierbei eine automatische Regelung bzw. Einstellung der Bürstendrehzahl vorgesehen, die für die jeweils herrschenden Prozessbedingungen eine optimale Filterbandreinigung erreicht. Hierzu kann die Steuervorrichtung mit Erfassungsmitteln verbunden sein, die verschiedene Betriebsparameter erfasst, in Abhängigkeit derer dann die Steuervorrichtung automatisch die Drehzahl einstellt. Beispielsweise können die Erfassungsmittel eine Beladungssensorik umfassen, mit Hilfe derer die Filterbeladung, d.h. die am Filterband abgesetzte Feststoffmenge und/oder die verbleibende Filterdurchlässigkeit bestimmt wird, so dass beispielsweise mit zunehmender Filterbeladung eine höhere Bürstendrehzahl eingestellt wird, während bei abnehmender Filterbeladung eine geringere Drehzahl eingestellt wird. Alternativ oder zusätzlich können die genannten Erfassungsmittel auch eine Feststoffdichtesensorik umfassen, um den Anteil der Feststoffe in der zu filtrierenden Flüssigkeit und/oder das Verhältnis von Flüssigkeitsmenge zu Feststoffmenge zu bestimmen. Steigt der Anteil der auszufiltrierenden Feststoffe in der Flüssigkeit an, kann beispielsweise die Bürstendrehzahl erhöht werden, während bei abnehmender Feststoffmenge die Drehzahl abgesenkt werden kann. Alternativ oder zusätzlich können die genannten Erfassungsmittel eine Partikelgrößensensorik umfassen, um die Partikelgröße der sich anhaftenden Feststoffe zu bestimmen. Steigt die Partikelgröße an, kann beispielsweise die Drehzahl erhöht werden, während bei kleineren Partikeln mit geringerer Bürstendrehzahl gearbeitet werden kann. Alternativ oder zusätzlich kann beispielsweise auch das Feststoffmaterial als Parameter herangezogen werden, anhand dessen die Bürstendrehzahl eingestellt wird. Alternativ oder zusätzlich kann eine rückkoppelnde Regelung der Bürstendrehzahl erfolgen dahingehend, dass der von der Bürste gereinigte Filterbandabschnitt beobachtet und hinsichtlich seiner Sauberkeit erfasst wird, beispielsweise durch optische Sensoren oder eine Bestimmung der Luft- und/oder Flüssigkeitsdurchlässigkeit des Bands. Die Bürstendrehzahl wird dann derart geregelt, dass sich stromab der Bürste eine größtmögliche Sauberkeit des Filterbands ergibt. Weitere Betriebsparameter können bei dieser Drehzahlregelung der Reinigungsbürste Verwendung finden.

Alternativ oder zusätzlich zu der Regelung der Bürstendrehzahl in Abhängigkeit der verschiedenen Betriebsparameter kann die Drehzahl der Bürste auch zyklisch variiert oder reversiert werden, beispielsweise dahingehend, dass bei jedem n-ten Umlauf des Filterbands ein Reinigungsvorgang mit erhöhter Bürstendrehzahl oder umgekehrter Drehrichtung der Bürste vorgenommen wird.

Alternativ oder zusätzlich zu einer Veränderung der Bürstendrehzahl kann in Weiterbildung der Erfindung auch die Andruckkraft der Bürste gegen das Filterband variiert werden, insbesondere durch Veränderung des Abstands der Bürstenachse von dem Filterband. Der Anpressdruck und/oder der Abstand der Bürstenachse vom Filterband können in entsprechender Weise von der genannten Steuervorrichtung in Abhängigkeit verschiedener Betriebsparameter automatisch gesteuert werden, beispielsweise dahingehend, dass bei Verschlechterung der Reinigungswirkung oder einer höheren Filterbeladung die Bürste stärker an das Filterband zugestellt wird. Auch die andere Kraft der Bürste kann in der genannten Weise zyklisch variiert werden, beispielsweise dahingehend, dass bei jedem n-ten Umlauf des Filterbands ein Reinigungszyklus mit erhöhter Andruckkraft durchgeführt wird.

Alternativ oder zusätzlich zu einer Veränderung der Bürstendrehzahl und/oder der Andruckkraft der Bürste kann in vorteilhafter Weiterbildung der Erfindung auch die Bewegungsgeschwindigkeit des Filterbands variiert werden. Hierzu ist dem Filterband ein Antrieb mit variabler Antriebsgeschwindigkeit zugeordnet. Vorteilhafterweise kann diesem Antrieb ein manueller Regler zugeordnet sein, um die Filterbandgeschwindigkeit manuell variieren zu können. Alternativ oder zusätzlich kann auch eine automatische Steuervorrichtung zur automatischen Veränderung der Filterbandgeschwindigkeit in Abhängigkeit zumindest eines Betriebsparameters vorgesehen sein, wobei vorteilhafterweise die vorgenannten Betriebsparameter herangezogen werden können, also insbesondere die Filterbeladung, die Feststoffdichte bzw. das Verhältnis der Flüssigkeitsmenge zur Feststoffmenge, die Partikelgröße, das Feststoffmaterial oder eine charakteristische Größe des Filterbands wie dessen Maschen- bzw. Porenweite oder dessen Flüssigkeitsdurchlässigkeit. Insbesondere kann beispielsweise bei zunehmender Filterbeladung oder zunehmendem Feststoffanteil im zu filtrierenden Flüssigkeits-/Feststoffgemisch die Bandgeschwindigkeit erhöht werden, während die Bandgeschwindigkeit bei abnehmender Filterbeladung oder abnehmendem Feststoffanteil reduziert werden kann.

Der genannte Bandreiniger kann prinzipiell in verschiedenen Abschnitten des Filterbands und/oder des Abwurfbereiches positioniert werden. In vorteilhafter Weiterbildung der Erfindung wird die Bürste mit einem Untertrum des Filterbands in Eingriff gebracht, und zwar vorzugsweise von einer Unterseite her, so dass die Bürste die Filterbandseite bearbeitet, auf die im Aufgabebereich der Filtrationsvorrichtung das zu filtrierende Feststoff-/Flüssigkeitsgemisch aufgegeben wird.

Um bei Bedarf in einem Wartungszyklus zusätzliche Reinigungsmaßnahmen vornehmen zu können oder das Filterband auszutauschen, ist nach einem weiteren Aspekt der vorliegenden Erfindung vorgesehen, dass das antreibbare Filterband mit dem genannten Bandreiniger zu einer Baugruppe zusammengefasst ist, die vom Einlauf der Filtrationsvorrichtung separat ausgebildet und gegenüber diesem Einlauf verfahrbar gelagert ist. Insbesondere kann die genannte Baugruppe umfassend das Filterband, dessen Antrieb und den Bandreiniger schubladenförmig ausgebildet sein, so dass die genannte Baugruppe bzw. der für den Filtrationsvorgang im Aufgabebereich zu positionierende Abschnitt des Filterbands nach Art einer Schublade in das Filtergehäuse eingeschoben bzw. aus diesem herausgezogen werden kann, ohne vorher die genannte Baugruppe in ihre Bestandteile zu demontieren. Das Filtergehäuse der Filtrationsvorrichtung besitzt hierzu vorteilhafterweise eine Einschuböffnung an einer aufrechten Gehäusewandung, so dass die genannte Baugruppe von der Seite her in das Filtergehäuse eingeschoben bzw. aus diesem herausgezogen werden kann.

Um beim Herausnehmen und Einsetzen der Filterbandbaugruppe das Handling zu vereinfachen, ist in vorteilhafter Weiterbildung der Erfindung vorgesehen, dass die genannte Baugruppe einen Wagen bildet, der durch ein Fahrwerk am Boden abgestützt und/oder durch eine Schiebeführung am Filtergehäuse verschieblich geführt ist. Hierdurch kann die genannte Baugruppe herausgezogen werden, ohne dass der Monteur bzw. Benutzer das gesamte Gewicht der Filterbaugruppe abfangen müsste. Durch die wagenartige Ausbildung der Baugruppe mit Fahrwerk kann ein müheloses Ein- und Ausfahren erreicht werden.

Um eine exakte Positionierung des Filterbands im Aufgabebereich und/oder ein passgenaues Zusammenspiel zwischen Einlauf und Filterband zu erreichen, ohne hierfür im Inneren des Filtergehäuses schwer zugängliche Positionierungsarbeiten ausführen zu müssen, ist in Weiterbildung der Erfindung an der genannten schubladenförmigen Baugruppe ein das Filterband umgebende Anschlusskragen vorgesehen, der mit dem Filtergehäuse verbindbar ist und einen Anschlag und/oder eine Positioniervorrichtung bildet, der bei Eingriff mit dem Filtergehäuse die gewünschte Position des Filterbands im Aufgabebereich exakt vorgibt. Wird die schubladenförmige Baugruppe mit dem Filterband voraus in das Filtergehäuse geschoben, bis der genannte Anschlusskragen am Filtergehäuse in Anlage kommt, ist der sich im Inneren des Filtergehäuses erstreckende Teil der schubladenförmigen Baugruppe exakt im Aufgabebereich positioniert, während der restliche Teil der Baugruppe umfassend den Bandreiniger und den Abwurfbereich außerhalb des Filtergehäuses angeordnet ist.

Um zu verhindern, dass das zu filtrierende Feststoff-/Flüssigkeitsgemisch mehrfach durch das Filterband bzw. verschiedene Abschnitte hiervon geht, bevor die verschiedenen Abschnitte abgereinigt werden, ist die Filtrationsvorrichtung nach einem weiteren Aspekt der vorliegenden Erfindung derart ausgebildet, dass das Feststoff-/ Flüssigkeitsgemisch nur einmal durch das selbe Filterband geleitet wird. Vorteilhafterweise ist das genannte Filterband dennoch nach Art eines Bandförderers um Umlenkrollen gefördert, so dass sich das Filterband im Aufgabebereich der Filtrationsvorrichtung mit einem Obertrum und einem Untertrum erstreckt, wobei das Filterband insbesondere in Form eines endlos umlaufenden Bandförderer ausgebildet sein kann. Um dennoch zu verhindern, dass das zu filtrierende Feststoff-/ Flüssigkeitsgemisch sowohl durch das Obertrum als auch durch das Untertrum hindurchgeht, besitzt die Filtrationsvorrichtung in Weiterbildung der Erfindung zwischen dem genannten Obertrum und dem Untertrum des Filterbands in dem im Aufgabebereich liegenden Abschnitt des Filterbandförderers eine Ableitfläche zur Ableitung von durch den Obertrum durchgeleiteter Flüssigkeit am Untertrum vorbei. Die genannte Ableitfläche fängt die durch den Obertrum durchgetretene Flüssigkeit vor dem Untertrum ab und leitet sie am Untertrum vorbei in den weiteren Teil des Flüssigkeitskreises.

Die genannte Ableitfläche kann hierbei grundsätzlich verschieden ausgebildet sein, beispielsweise in Form einer zu einer Seite hin geneigten Schrägfläche. In Weiterbildung der Erfindung kann die genannte Ableitfläche eine - grob gesprochen - satteldachförmige Konturierung besitzen, deren First im Wesentlichen parallel zur Laufrichtung des Filterbands ausgerichtet ist und zum Obertrum hin orientiert ist, so dass die von der Ableitfläche aufgefangene Flüssigkeit zu beiden Seiten hin am Untertrum vorbei abgeleitet wird.

In Weiterbildung der Erfindung besitzt die genannte Ableitfläche hierbei quer zur Laufrichtung des Filterbands verlaufende Stromrichtungselemente vorzugsweise in Form von Stromrichtungsleisten, um die aufgefangene Flüssigkeit zu beruhigen und die vom Filterband herrührende Längskomponente der Strömung zu dämpfen und die aufgefangene Flüssigkeit gezielt in die gewünschte Richtung abzuleiten.

In Weiterbildung der Erfindung kann die genannte Ableitfläche wannenförmig ausgebildet sein, um ein unkontrolliertes Überströmen bzw. Ablaufen der aufgefangenen Flüssigkeit zu verhindern. Insbesondere kann die genannte Ableitfläche an seitlichen Randbereichen Aufkantungen, Erhöhungen oder anderweitig ausgebildete Rückhaltekonturen besitzen, um ein kontrolliertes Ableiten der aufgefangenen Flüssigkeit erreichen zu können.

Insbesondere können an der genannten Ableitfläche Bandführungsleisten vorgesehen sein, die den Obertrum des Filterbands an dessen seitlichen Rändern umgreifen oder überdecken und den Aufgabebereich seitlich begrenzen. Derartige Bandführungsleisten erfüllen nicht nur den Zweck, das Filterband zu führen und einen übermäßigen Durchhang oder ein Abknicken des Filterbands unter der aufgegebenen Last zu verhindern, sondern verhindern auch ein unkontrolliertes Überspülen des Obertrums des Filterbands, was zu einem ungefilterten Überlauf führen könnte. Die genannten, seitlich über die Filterbandränder überstehenden Bandführungsleisten halten das aufgegebene Feststoff-/Flüssigkeitsgemisch im Bereich des Obertrums zurück, so dass das genannte Gemisch im Wesentlichen vollständig durch den Obertrum des Filterbands hindurchtritt und hierdurch filtriert wird. Die genannte Auffang- bzw. Ableitfläche zwischen Obertrum und Untertrum erhält hierdurch eine Doppelfunktion dahingehend, dass einerseits die unter dem Obertrum aufgefangene Flüssigkeit am Untertrum vorbei abgeleitet wird und andererseits die vollständige Filtration durch das Obertrum hindurch sichergestellt wird.

Um das vom Filterband zu entfernende Gut besser handhaben zu können und dabei gleichzeitig die Bandreinigung leichter bewerkstelligen zu können, ist nach einem weiteren Aspekt der vorliegenden Erfindung dem Filterband zwischen dem Aufgabebereich und dem Abwurfbereich der Filtrationsvorrichtung eine Trocknungsvorrichtung zur Trocknung der am Filterband angelagerten Feststoffe zugeordnet. Die angelagerten Feststoffe müssen hierbei nicht zwangsweise vollständig getrocknet werden, sondern können angetrocknet oder zu einem gewissen Grad entfeuchtet werden, wobei je nach Anwendungsfall verschiedene Trocknungsgrade erzielt werden können. Die Trocknungsvorrichtung kann hierzu grundsätzlich verschieden ausgebildet sein und ggf. mehrere nebeneinander oder hintereinander angeordnete Trocknungsmittel umfassen. In Weiterbildung der Erfindung kann die Trocknungsvorrichtung zumindest einen Energiestrahler, beispielsweise in Form eines Infrarot-Strahlers aufweisen, um das am Filterband anhaftende Filtrationsgut mit Strahlungsenergie zu beaufschlagen. Alternativ oder zusätzlich kann die Trocknungsvorrichtung zumindest einen Luftstromerzeuger beispielsweise in Form eines Gebläses oder eines Saugers aufweisen. Mittels eines solchen Luftstromerzeugers können die am Filterband anhaftenden Feststoffe mit Trocknungsluft beaufschlagt werden, so dass sie von dem zuvor genannten Bandreiniger leichter vom Filterband gelöst und leichter weiterbehandelt werden können.

Zur weiteren Trocknung der Feststoffe können weitere Trocknungsmittel Verwendung finden. Beispielsweise können ein Zyklonenabscheider, eine Vakuumpumpe oder andere feuchtigkeitsentziehende Mittel vorgesehen sein.

In Weiterbildung der Erfindung können verschiedene Filterbänder hintereinander in Stufen-, Tandem- oder Mehrfachanordnung vorgesehen sein, wobei vorzugsweise verschiedene Filterbänder verschieden ausgebildet sind. In Weiterbildung der Erfindung können verschiedene Filterfeinheiten vorgesehen sein, um kaskadenartig hintereinander immer feinere Feststoffpartikel herauszufiltern. Alternativ können jedoch auch gleichartig ausgebildete Filterbänder in verschiedenen Anordnungen zueinander Teil der Filtervorrichtung bilden.

Das Filterband bzw. die Filterbänder können grundsätzlich verschieden ausgebildet sein, wobei als Filtermedium natürliche oder synthetische Fasern in Gewebe- oder Maschinenform verarbeitet zum Einsatz kommen können. Alternativ oder zusätzlich können auch behandelte und/oder beschichtete Filtermedien vorgesehen sein. Beispielsweise können Fasermaterialien aus Polykondensaten und deren Copolymeren oder aus Polyolefinen und deren Copolymeren hergestellt sein. Vorteilhafterweise ist das Filterband als Endlosband ausgeführt und von daher wartungsfrei und wiederverwendbar. Das Endlosband kann hierbei durch Zusammenfügen der Enden eines zunächst endlich hergestellten Filterbands gefertigt sein, wobei die beiden Enden des Filterbands je nach Ausbildung des Filterbands verklebt, verschweißt, verpresst, verkettet, verlinkt, verschraubt, vernäht oder anderweitig fest oder trennbar miteinander verbunden sein können. Das Material des Filterbands kann als Kunststoffgewebe in ein- oder mehrlagiger Ausführung, kett- oder schussgebunden sowie ggf. antistatisch ausgebildet sein. Alternativ oder zusätzlich kann ein fein gewebtes Edelstahlgewebe in unbeschichteter oder beschichteter Ausführung oder ein fixiertes und/oder beschichtetes Glasfasergewebe als Filterband verwendet werden. Die Filterfeinheit wird an den jeweiligen Prozess bzw. die beim jeweiligen Prozess anfallenden Feststoffe und die dabei verwendeten Prozessflüssigkeiten angepasst, wobei ein guter Kompromiss für verschiedene Anwendungen eine Filterfeinheit im Bereich von 0,05 bis 0,25 und insbesondere etwa 0,15 mm vorgesehen sein kann.

Um eine gleichmäßige Aufgabe des zu filtrierenden Feststoff-/ Flüssigkeitsgemisches auf das Filterband zu erreichen, umfasst der Einlass in vorteilhafter Weiterbildung der Erfindung ein mit Staustufen versehenes Aufgabebett, das eine Auslauf- bzw. Aufgabeöffnung umfasst, die von dem zu filtrierenden Feststoff-/ Flüssigkeitsgemisch erst nach Überströmen zumindest einer Staustufe erreicht wird. Vorteilhafterweise wird hierdurch das zu filtrierende Feststoff-/Flüssigkeitsgemisch näherungsweise verwirbelungsfrei und/oder turbulenzfrei auf das Filterband aufgegeben, so dass das genannte Gemisch sich mit laminarer Strömung auf dem Filterband ausbreitet.

Anstelle der genannten Staustufen können auch andere oder zusätzliche die Aufgabeströmung beruhigende Strömungssteuermittel vorgesehen sein, beispielsweise in Form von Rippen, Wellen, Vorsprüngen oder anderen die Aufgabeströmung vergleichmäßigenden, geschwindigkeitsvermindernden und/oder beruhigenden Strömungsmitteln. Der Einlauf kann in Weiterbildung der Erfindung eine Einlaufwanne umfassen, deren Boden in Längsrichtung des Filterbandes abschüssig geneigt ist und zu einer Auslauföffnung führt, die verschieden konturiert sein kann, vorzugsweise oval, elliptisch oder rechteckig mit abgerundeten Ecken. Durch eine abgerundete Kontur der Austrittsöffnung der Aufgabewanne kann ein gleichmäßiges Aufbringen der Flüssigkeit auf das Filterband erzielt werden. Im Bereich des abschüssigen Bodens der Aufgabewanne stromauf der genannten Austrittsöffnung können die vorgenannten Strömungsmittel zur Beruhigung, Vergleichmäßigung oder Verlangsamung der Aufgabeströmung angeordnet sein.

Die vorliegende Erfindung wird nachfolgend anhand eines bevorzugten Ausführungsbeispiels und zugehöriger Zeichnungen näher erläutert. In den Zeichnungen zeigen:

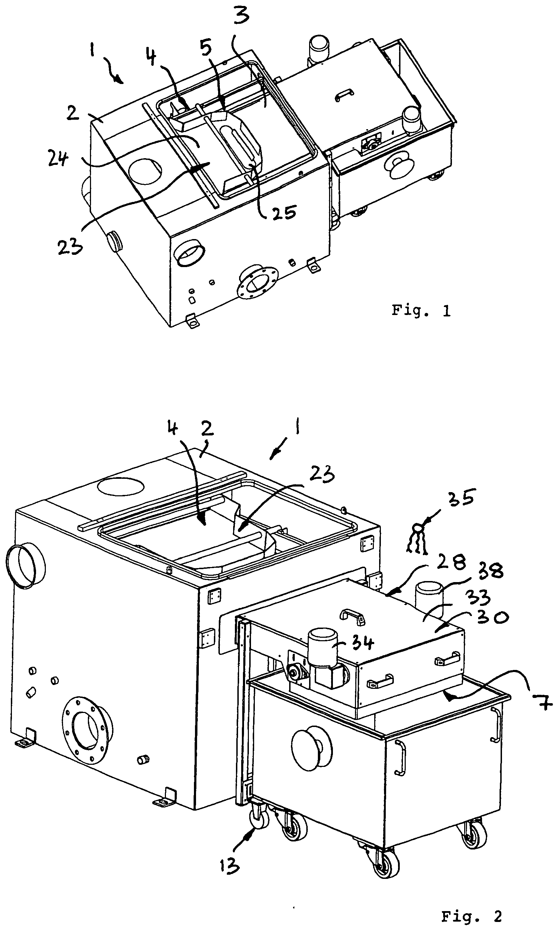

- Fig. 1:: eine schematische, perspektivische Darstellung der Filtrationsvorrichtung nach einer vorteilhaften Ausführung der Erfindung, wobei der Aufgabebereich der Filtrationsvorrichtung schräg von oben gezeigt ist, so dass die im Einlauf angeordnete Aufgabewanne und das darunter befindliche Filterband zu sehen ist,
- Fig. 2:: eine schematische, perspektivische Darstellung der Filtrationsvorrichtung aus Fig. 1 aus einem anderen Blickwinkel, der den außerhalb des Filtergehäuses befindlichen Teil des Filterbandes sowie den unter dem Abwurfbereich angeordneten Sammelbehälter für die ausfiltrierten Feststoffe zeigt,
- Fig. 3:: eine Seitenansicht der Filtrationsvorrichtung aus den vorhergehenden Figuren, die im Bereich des Filtergehäuses als Schnittdarstellung ausgebildet ist, um das im Inneren des Filtergehäuses angeordnete Filterband und den diesem zugeordneten Einlauf zu zeigen,
- Fig. 4:: eine perspektivische, schematische Darstellung der Filterbandbaugruppe umfassend das endlos umlaufende Filterband, dessen Führungs-, Umlenk- und Antriebsmittel sowie den dem Filterband zugeordneten Bandreiniger und das Fahrwerk zur Abstützung der Baugruppe am Boden,
- Fig. 5:: eine Draufsicht auf das Filterband aus Fig. 4 von unten her, die den dem Untertrum des Filterbands zugeordneten Bandreiniger umfassend einen Abstreifer zur Grobabreinigung und eine selbstreinigende Bürstenwalze, der eine Reinigungsrakel zugeordnet ist, zeigt,
- Fig. 6:: eine perspektivische Darstellung des Abwurfbereiches des Filterbands schräg von unten her, die den genannten Abstreifer und die genannte Bürstenwalze des Bandreinigers zeigt,
- Fig. 7:: eine ausschnittsweise, vergrößerte Schnittansicht der Reinigungsbürste und der dieser zugeordneten Reinigungsrakel, die die Anordnung der Reinigungsrakel im Umlaufbereich der Borsten zeigt,
- Fig. 8:: eine perspektivische, schematische Ansicht der Reinigungsbürste, die die bei dieser Ausführungsform pfeilförmige Schrägstellung des Borstenfelds zeigt,
- Fig. 9:: eine perspektivische, vergrößerte Darstellung der Aufgabewanne zur Aufgabe des Feststoff-/Flüssigkeitsgemischs auf das Filterband, und
- Fig. 10:: eine schematische Darstellung möglicher Ausführungsformen des Filterbandes.

Die in den Figuren gezeigte Filtrationsvorrichtung 1 umfasst ein Filtergehäuse 2, durch das hindurch mit Feststoffen verunreinigte Flüssigkeit zum Zwecke der Filtration geleitet wird. Die zu filtrierende Flüssigkeit kann hierbei verschiedenen Zwecken dienen, beispielsweise als im Kreislauf geführte Prozessflüssigkeit einer Industrieanlage. In Betracht kommen hierbei im Kreis geführte Kühlflüssigkeiten wie beispielsweise Öl oder Wasser zur Kühlung von Werkzeugmaschinen oder anderen Fertigungsanlagen, bei denen partikelförmige Verunreinigungen der Prozessflüssigkeit entstehen, deren Rückgewinnung notwendig ist oder lohnt. In Betracht kommt auch die Reinigung von Kühlwasser, das durch Umweltstoffe wie Blätter und dergleichen verunreinigt ist.

Insbesondere von Vorteil ist der Einsatz der Filtrationsvorrichtung 1 bei Granuliervorrichtungen zur Granulierung von Kunststoffen, wie beispielsweise Ringgranulierern oder Stranggranulierern und insbesondere Unterwassergranulierern, bei denen die granulierten Kunststoffe in einen Prozessflüssigkeitskreislauf gegeben werden. Die granulierten Pellets werden hierbei durch übliche Abscheider entfernt, kleinere Verunreinigungen durch Kunststoffpartikel können dann durch die gezeigte Filtrationsvorrichtung ausgefiltert und separiert werden. In diesem Fall ist die gezeigte Filtrationsvorrichtung in den Prozessflüssigkeitskreislauf stromab des Pelletabscheiders geschaltet.

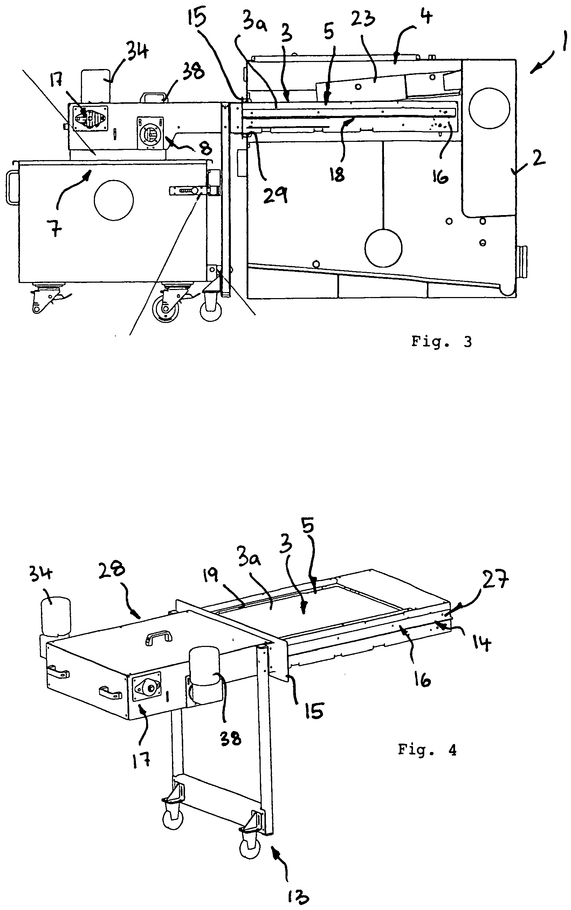

Das zu filtrierende Feststoff-/Flüssigkeitsgemisch wird über einen Einlauf 4 in das Innere des Filtergehäuses 2 gegeben und über eine Aufgabewanne 23 in einem Aufgabebereich 5 auf ein kontinuierlich oder intermittierend antreibbares Filterband 3 gegeben, das sich in einer liegenden, d.h. horizontalen oder gegenüber der Horizontalen nur leicht, spitzwinklig geneigten Ausrichtung befindet. In der gezeichneten Ausführung ist das Filterband 3 horizontal ausgerichtet, vgl. Fig. 3.

Das gezeigte Filterband 3 befindet sich hierbei in einem oberen Bereich, beispielsweise in einem oberen Drittel des Innenraums des Filtergehäuses 2, so dass die durch das Filterband 3 hindurchtretende Prozessflüssigkeit sich in einem unteren Bereich des Filtergehäuses 2 sammeln kann, der gleichzeitig als Flüssigkeitstank bzw. Zwischenspeicher dient.

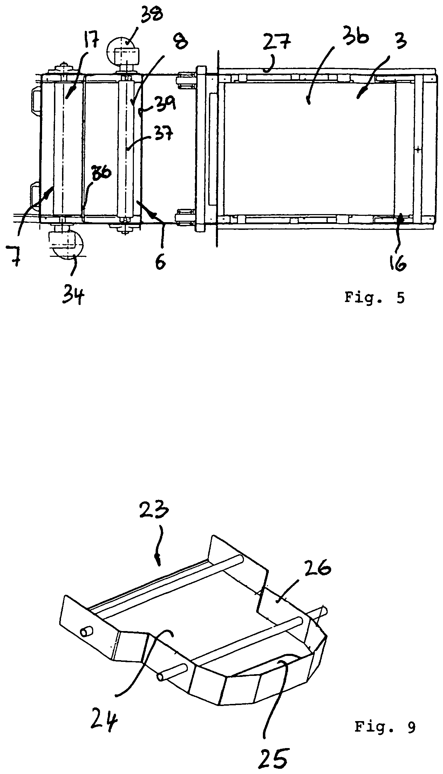

Die genannte Aufgabewanne 23 des Einlaufs 4 ist in Fig. 9 näher gezeigt und umfasst vorteilhafterweise einen geneigten Boden 24, der sich zu einer Senke in einem Endbereich der Aufgabewanne 23 hin neigt, wobei in der genannten Senke eine Auslauföffnung 25 vorgesehen ist, die in der gezeichneten Ausführungsform eine längliche, ovale oder leicht elliptische Konturierung besitzt, jedoch produktspezifisch auch anders konturiert sein kann, beispielsweise in Form eines rechteckigen oder vieleckigen Langlochs. Vorteilhafterweise verjüngt sich die Aufgabewanne 23 zu der Auslauföffnung 25 hin, d.h. die Breite quer zur Neigung des Bodens 24 nimmt zur Auslauföffnung 25 hin ab, vgl. Fig. 9, wobei die Verjüngung kontinuierlich oder stufig ausgebildet sein kann. Der genannte Boden 24 wird hierbei durch einen randseitigen Wannenrand 26 begrenzt, der sich gegenüber dem Boden 24 erhebt und ein randseitiges Überlaufen verhindert.

Die zu reinigende Flüssigkeit wird nach beruhigtem, definiertem Überlauf in die gezeigte Aufgabewanne 23 seitlich geführt und durch versetzte Staustufen, bei Bedarf, weiter beruhigt. Derartige Staustufen können im Boden 24 vorgesehen sein, wobei jedoch auch andere strömungsberuhigende, geschwindigkeitsvermindernde und/oder vergleichmäßigende Strömungssteuermittel insbesondere am Boden 24 ausgebildet sein können.

Das unter der Auslauföffnung 25 der Aufgabewanne 23 angeordnete, liegend ausgerichtete Filterband 3 ist als endlos umlaufender Bandförderer ausgebildet und läuft um zumindest zwei voneinander beabstandete Umlenkrollen 16, 17 um, die an einem vorzugsweise geschlossenen Trägerrahmen 27 gelagert sind, wobei an dem genannten Trägerrahmen 27 seitliche Auflageführungen vorgesehen sein können, die dem Anwendungsfall entsprechend als Gleitführung mit einem Kunststoff beispielsweise in Form von PE-UHM belegt ausgebildet sein können. Alternativ oder zusätzlich kann eine Rollführung mit entsprechend gelagerten Rollen aus Metall oder Kunststoff im Filtergehäuse 2 vorgesehen sein.

Wie Fig. 4 zeigt, ist das Filterband 3 Teil einer schubladenförmigen Baugruppe 28, die in das genannte Filtergehäuse 2 eingeschoben und herausgezogen werden kann. Hierzu besitzt das Filtergehäuse 2 in einer vertikalen Wandung eine Einführöffnung 29, die im Querschnitt ein wenig größer als der genannte Bandförderer ausgebildet ist. Genauer gesagt kann ein Teil der genannten Baugruppe 28, nämlich ein Teil des Filterbands 3 umfassend einen Teil der Obertrums 3a und einen Teil des Untertrums 3b und die dazwischen liegende Umlenkrolle 16 schubladenartig in das genannte Filtergehäuse 2 eingeschoben werden, so dass die entsprechenden Abschnitte des Filterbands 3 passgenau in dem Aufgabebereich 5 unter der Aufgabewanne 23 zu liegen kommen. Der andere Teil des Filterbands 3 läuft indes außerhalb des Filtergehäuses 2, wo das Filterband 3 den Abwurfbereich 7 durchläuft. Um das Filterband 3 in dem Filtergehäuse 2 passend zu positionieren und das Filtergehäuse 2 abdichtend zu verschließen, ist ein das Filterband 3 umgebender Anschlusskragen 15 vorgesehen, der sich im Wesentlichen senkrecht zur Laufrichtung der Filterbandtrume erstreckt. Der genannte Anschlusskragen 15 wird in abdichtender Weise mit dem Filtergehäuse 2 verbunden, beispielsweise durch ein mechanisches Andrücken an den die Einführöffnung 29 umgebenden Rand des Filtergehäuses 2 mittels Spannelemente. Zur Abdichtung gegenüber dem Filtergehäuse 2 kann zwischen dem Filtergehäuse 2 und dem Anschlusskragen 15 eine vorzugsweise hoch temperaturbeständige und/oder lebensmittelzugelassene Dichtung vorgesehen sein, beispielsweise in Form einer Ringdichtung aus einem verformbaren Werkstoff wie beispielsweise einem geeigneten Kunststoff.

Der aus dem Filtergehäuse 2 herausragende Teil des Filterbandes 3 ist von einer gehäuseartigen Abdeckung 30 umgeben, die in der gezeichneten Ausführung kastenförmig ausgebildet ist und den herausstehenden Teil des Filterbandes 3 allseitig umgibt und mit dem genannten Anschlusskragen 15 verbunden ist. An der Unterseite besitzt die genannte Abdeckung 30 eine Abwurföffnung 31, durch die hindurch von dem Filterband 3 gelöste, abgereinigte Feststoffe in einen darunter befindlichen Auffangbehälter 32 abgeworfen werden.

Zum Herausziehen und Transportieren der genannten Baugruppe 28 umfassend das Filterband 3 ist ein Fahrwerk 13 zur Abstützung der Baugruppe 28 am Boden vorgesehen, wobei das genannte Fahrwerk 13 in der gezeichneten Ausführung Rollen bzw. Räder aufweist, die einachsig angeordnet sind, wobei jedoch auch ein mehrachsiges Fahrwerk vorgesehen werden kann. Alternativ oder zusätzlich zu dem genannten Fahrwerk 13 kann die Baugruppe 28 durch eine Schiebeführung 14 verschieblich an dem Filtergehäuse 2 geführt sein, wobei die genannte Schiebeführung 14 beispielsweise an dem Trägerrahmen 27 für das Filterband 3 vorgesehen sein kann, beispielsweise in Form von Führungsleisten oder -nuten, die mit komplementär ausgebildeten Führungsmitteln am Filtergehäuse 2 in Eingriff stehen. Um ein ungewolltes vollständiges Herausziehen der schubladenförmigen Baugruppe 28 zu verhindern, kann an dem inneren Ende des Trägerrahmens 27 ein lösbares Sicherungselement beispielsweise in Form eines Sicherungsbolzens vorgesehen sein, der am Filtergehäuse 2 von innen her ansteht, wenn die Baugruppe 28 vollständig herausgezogen wird.

Die vorgenannte Abdeckung 30 besitzt vorteilhafterweise einen oberseitig angeordneten, lösbaren Deckel 33, um den Zugang zu dem Filterband 3 auch von oben her zu ermöglichen. Vorteilhafterweise ist der Deckel 33 für den Betrieb abdichtend mit dem Korpus der Abdeckung 30 verbunden.

In dem außerhalb des Filtergehäuses 2 befindlichen Teil des Filterbandes 3 befindet sich die Antriebsvorrichtung 34 zum umlaufenden Antreiben des Filterbandes 3. Die genannte Antriebsvorrichtung 34 umfasst vorteilhafterweise einen in der Drehzahl veränderlichen Motor beispielsweise in Form eines Elektromotors, der ggf. über ein Getriebe, welches ein festes oder ein variables Übersetzungsverhältnis haben kann, eine der Umlenkrollen 17 antreibt, um die das Filterband 3 umgelenkt wird. Gegebenenfalls kann die Antriebsvorrichtung 34 auch über ein separates Antriebsrad, welches an geeigneter Stelle auf das Filterband 3 drückt bzw. mit diesem in Eingriff steht, das Filterband 3 antreiben. Bevorzugt ist jedoch ein Antrieb über die Umlenkrolle 17. Die genannte Umlenkrolle 17, die vorteilhafterweise als Walze ausgebildet ist, kann je nach Ausbildung des Filterbandes 3 unterschiedlich ausgebildet sein, beispielsweise in Form einer balligen Walze oder eine zylindrischen Walze, wobei vorteilhafterweise die genannte Umlenkrolle 17 und/oder eine andere Umlenkrolle 16 zumindest eine Führungsnut und/oder zumindest einen Führungsvorsprung beispielsweise in Form eines im Endbereich der Umlenkrolle seitlich neben dem Filterband vorspringenden Randstegs aufweisen kann, um einen geraden Auslauf des Filterbands 3 sicherzustellen. Das genannte Filterband 3 kann hierzu ggf. an seiner Innenseite mit in die genannte Führungsnut eingreifenden Vorsprüngen versehen sein. Alternativ oder zusätzlich kann zumindest eine der Umlenkrollen 16, 17 ein Führungsritzel umfassen, das in am Filterband 3 komplementär vorgesehene Ausnehmungen eingreift. Alternativ oder zusätzlich kann umgekehrt an dem Filterband 3 eine Zahnreihe, Nutprofilreihe oder eine ähnliche Profilierung mit Eingriffsvorsprüngen vorgesehen sein, die in entsprechende komplementär ausgebildete Eingriffsvorsprünge in der Umfangsfläche der Umlenkrolle eingreifen. Bei einem solchen Ritzeleingriff zwischen Filterband 3 und Umlenkrolle ist ein Durchrutschen zuverlässig unterbunden.

Die genannte Antriebsvorrichtung 34 wird vorteilhafterweise von einer nur schematisch angedeuteten Steuervorrichtung 35 angesteuert, um die Bandgeschwindigkeit an die Prozessparameter anzupassen, wobei die Fördergeschwindigkeit insbesondere in Abhängigkeit des Verhältnisses von Flüssigkeit zu Feinteilen variiert werden kann, insbesondere dahingehend, dass bei zunehmender Partikelmenge die Fördergeschwindigkeit erhöht wird. Alternativ oder zusätzlich zu dem Wasserverhältnis zu Feinteilen können auch andere Betriebsparameter Berücksichtigung finden, wie eingangs näher erläutert.

Hinter der angetriebenen Umlenkrolle 17 im unteren Bereich des Leertrums des Filterbands 3 ist im Abwurfbereich 7 ein Bandreiniger 6 vorgesehen, der das Filterband 3 kontinuierlich abreinigt. Zunächst ist an dem von der Umlenkrolle 17 ablaufenden Untertrum 3b des Filterbands 3 ein Grobabstreifer 36 beispielsweise in Form einer Spachteleinrichtung oder einer Rakel vorgesehen, der eine grobe, erste Abreinigung des Filterbands 3 vornimmt. Dieser Grobabstreifer 27 ist vorteilhafterweise hinsichtlich seiner Winkelstellung und/oder seiner Einstelltiefe bzw. Zustellposition beweglich gelagert, so dass je nach Filterband und Prozessprodukt verschiedene Anstellwinkel und/oder verschiedene Zustellpositionen bzw. Bandabstände einstellbar sind. Die genannte Winkelverstellbarkeit der Abstreiferlagerung kann hierbei einachsig oder zweiachsig ausgebildet sein, wobei vorteilhafterweise einerseits der Grobabstreifer 36 um seine Längsachse parallel zur Ebene des Filterbands 3 verkippbar und um eine Achse senkrecht zu dem Untertrum 3b verdrehbar sein kann.

Der genannte Grobabstreifer 36 kann hierbei verschiedene Formen besitzen, wobei sich in vorteilhafter Weiterbildung der Erfindung eine Messerform, Keilform, Flachform, Spitzform und Tropfenform bewährt haben. Der Grobabstreifer 36, der insbesondere als stegförmige bzw. streifenförmige Rakel ausgebildet sein kann, kann aus verschiedenen Materialien gefertigt sein, beispielsweise aus einem Kunststoff wie PE-UHM, aber auch PTFE, PA, PPS oder POM, wobei auch Metall Verwendung finden kann. In Weiterbildung der Erfindung kann hierbei eine Beschichtung auf dem Grobabstreifer 36 aufgebracht sein, beispielsweise in Form einer verschleißmindernden Beschichtung zur Verringerung des Verschleißes des Filterbandes und/oder in Form einer haftreibungsvermindernden Beschichtung wie Teflon, um das Ablösen der Partikel von dem Grobabstreifer 36 zu erleichtern.

Die Feinteileabreinigung wird in der gezeichneten Ausführungsform mittels einer rotierend antreibbaren Bürste 8 bewerkstelligt, die ebenfalls am Leertrum des Filterbands 3 angeordnet ist und stromab von dem Grobabstreifer 36 beabstandet angeordnet ist. Die genannte Bürste 8 kann hierbei insbesondere als Bürstenwalze ausgebildet sein, die um eine Bürstendrehachse 37 drehbar gelagert ist, die vorteilhafterweise parallel zur Ebene des Untertrums 3b und vorzugsweise senkrecht zur Förderrichtung des Filterbands 3, ggf. leicht schräg, spitzwinklig hierzu angeordnet ist.

Die Antriebsbewegung der Bürste 8 kann beispielsweise mittels einer mechanischen Koppelung in Form einer Kette, eines Riemens oder einer Ritzelanordnung vom Antrieb des Filterbands 3 abgeleitet sein, wobei die Bürste 3 gleichläufig oder gegenläufig zum Filterband 3 angetrieben sein kann, wobei bei gleichläufiger Antriebsbewegung durch entsprechend hohe Antriebsgeschwindigkeit eine Relativgeschwindigkeit erzeugt wird. In vorteilhafter Weiterbildung der Erfindung jedoch ist die Bürste 8 durch einen gegenüber der Fördergeschwindigkeit des Filterbandes 3 geschwindigkeitsvariablen Antrieb 38 angetrieben, der beispielsweise einen drehzahlvariablen Antriebsmotor in Form eines Elektromotors umfassen kann. Alternativ oder zusätzlich kann der genannte Antrieb 38 auch ein übersetzungsvariables Getriebe umfassen, mittels dessen dann die Antriebsbewegung wieder von dem Antrieb des Filterbands oder vom separaten Antriebsmotor abgeleitet werden könnte. Vorteilhafterweise wird die Bürste 8 gegenläufig zum Filterband 3 betrieben.

In Weiterbildung der Erfindung wird die Antriebsgeschwindigkeit der Bürste 8 von einer nur angedeuteten Steuervorrichtung 35 gesteuert bzw. geregelt, um einen möglichst hohen Abreinigungsgrad zu erzielen. Die Steuerung der Bürstendrehzahl kann hierbei in Abhängigkeit verschiedener Variablen gesteuert werden, beispielsweise in Abhängigkeit des Verhältnisses von Feststoffen zu Flüssigkeitsmenge, der Filterbeladung im Aufgabebereich, des Feststofftyps, der Feststoff- und/oder Flüssigkeitstemperatur, der Partikelgröße und/oder anderer Betriebsparameter, wie eingangs näher erläutert. Hierzu kann die Steuervorrichtung 35 mit geeigneten Erfassungsmitteln gekoppelt sein, in Abhängigkeit von deren Signalen die Steuervorrichtung 35 die Bürstendrehzahl variiert.

Die Eingriffsstärke der Bürste 8 in das Filterband 3 ist vorteilhafterweise veränderbar ausgebildet, insbesondere in Abhängigkeit der Besatzform der Bürste und der Auswahl des Borstenmaterials. Alternativ oder zusätzlich können weitere der vorgenannten Betriebsparameter Berücksichtigung finden, beispielsweise dahingehend, dass bei nicht ausreichendem Reinigungsgrad eines stromab der Bürste 8 überwachten Bandabschnitts der Anpressdruck erhöht wird. Die Bürste 8 ist hierzu vorteilhafterweise beweglich gelagert, insbesondere in einer Richtung auf das Filterband 3 zu und von dem Filterband 3 weg, so dass der Anpressdruck variiert werden kann. Die dieser Beweglichkeit zugeordnete Einstellvorrichtung kann manuell ausgebildet sein, vorteilhafterweise jedoch auch mit einer fremdenergiebetätigten Stellvorrichtung versehen sein, so dass die genannte Steuervorrichtung 35 den Anpressdruck der Bürste 8 in Abhängigkeit eines oder mehrerer der vorgenannten Betriebsparameter steuern kann.

Zur Erzielung einer besseren Abreinigung kann die Drehzahl und/oder der Anpressdruck der Bürste 8 auch zyklisch variiert werden, beispielsweise dahingehend, dass die Bürste 8 reversierend abwechselnd gleichläufig und gegenläufig zum Filterband 3 betrieben wird und/oder bei jedem n-ten Umlauf des Filterbands 3 mit einer erhöhten Drehgeschwindigkeit und/oder einer erhöhten Anpresskraft betrieben wird. Derartige zyklische Variationen der Bürstendrehzahl und des Bürstenanpressdrucks können verbesserte Reinigungsergebnisse bei gleichzeitig reduziertem Filterbandverschleiß erzielen.

Die Bürste 8 kann über die gesamte Breite des Filterbandes 3 einstückig ausgebildet sein. Vorteilhafterweise kann jedoch auch eine mehrteilige bzw. in Segmenten unterteilte Ausbildung der Bürste 8 vorgesehen sein, wodurch ein schnellerer Wechsel der Bürste ermöglicht wird.

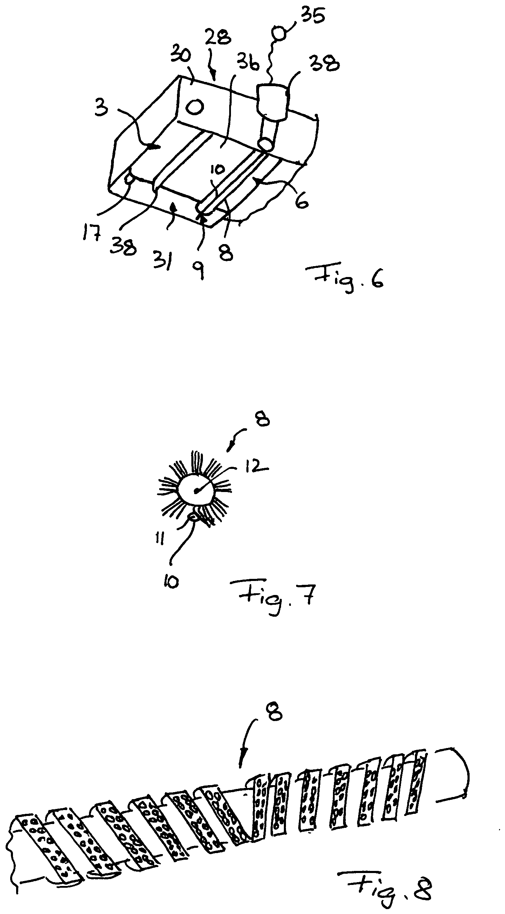

Die Beborstung der Bürste 8 kann ebenfalls unterschiedlich ausgebildet sein, beispielsweise in Form eines Vollbesatzes oder eines aufgelockerten Büschelbesatzes. In vorteilhafter Weiterbildung der Erfindung kann ein strukturierter Borstenbesatz vorgesehen sein, bei dem die von den Borstenenden gebildete Arbeitsfläche der Bürste 8 definierte, reliefartige Konturveränderungen besitzt, beispielsweise in Form von Spalten, höher und niedriger vorspringenden Borstenfeldabschnitten und dergleichen. Insbesondere kann der Borstenbesatz eine schraubenförmige Profilierung und/oder eine ein- oder mehrreihige Wendelung besitzen, wobei vorteilhafterweise die in Fig. 8 gezeigte keilförmige Wendelung bzw. Profilierung vorgesehen sein kann, um eine Vergleichmäßigung des Partikelabtrags quer zur Förderrichtung zu erzielen.

Die Borsten für die Beborstung können aus unterschiedlichen Materialien gefertigt sein, wobei Kunststoff oder Naturfasern vorteilhaft sind, aber auch Metallborsten vorgesehen sein können, wobei optional eine Beschichtung vorgesehen sein kann.

Zur Abreinigung der Bürste 8 ist ein Bürstenreiniger 9 vorgesehen, der in der gezeichneten Ausführung einen Bürstenabstreifer 10 umfasst, der vorteilhafterweise in Form einer Rakel ausgebildet sein kann. Die genannte Rakel kann hierbei ein zylindrischer Rundstab sein, ggf. jedoch auch eine Profilierung nach Art eines Strangprofils besitzen oder mit einer in Längsrichtung variierenden Profilierung, beispielsweise einer Wendelung oder einem Schraubprofil versehen sein, insbesondere dann, wenn die genannte Rakel um ihre Längsachse rotatorisch antreibbar ist.

Wie Fig. 7 zeigt, ist der genannte Bürstenabstreifer 10 mit seiner Längsachse im Wesentlichen parallel zur Bürstendrehachse 12 angeordnet, wobei der genannte Bürstenabstreifer 10 in der gezeichneten Ausführungsform vollständig in das Borstenfeld der Bürste 8 eintauchend angeordnet ist. Um die Abreinigung der Bürste 8 an die variierenden Prozessbedingungen anpassen zu können, ist der Bürstenabstreifer 10 vorteilhafterweise beweglich gelagert. Einerseits kann die Position des Bürstenabstreifers 10 vorteilhafterweise eingestellt werden, wobei vorteilhafterweise der Abstand zur Bürstendrehachse 12 variiert werden kann und/oder die Position entlang der Umfangsrichtung der Bürste 8 variiert werden kann. In der gezeichneten Ausführung ist der Bürstenabstreifer 10 in einer Position von 180°, d.h. genau auf der dem Filterband 3 gegenüberliegenden Seite der Bürste 8 angeordnet. Je nach Positionseinstellung kann der Bürstenabstreifer 10 jedoch auch in einem Bereich von 90° bis 270° in Umfangsrichtung der Bürste variiert werden.

Besitzt der Bürstenabstreifer 10 in der vorgenannten Weise einen von der Kreisform abweichenden Querschnitt, kann der Bürstenabstreifer auch drehbar gelagert sein und von einem Antrieb rotatorisch angetrieben werden. Vorteilhafterweise kann der entsprechende Antrieb auch hier drehzahlvariabel ausgebildet sein, wobei die schon genannte Steuervorrichtung 35 eine automatische Einstellung bzw. Regelung der Drehzahl vornehmen kann, vorteilhafterweise unter Berücksichtigung zumindest eines der vorgenannten Betriebsparameters und/oder zusätzlich in Abhängigkeit der Drehzahl der Bürste 8. Beispielsweise kann der Bürstenabstreifer 10 tiefer in das Borstenfeld der Bürste 8 gefahren werden, wenn eine stärkere Reinigungswirkung notwendig ist, beispielsweise bei einem höheren Partikelanteil pro Wassermenge. Alternativ oder zusätzlich kann beispielsweise die Drehzahl des Abstreifers erhöht werden, wenn die Partikelgröße zunimmt und größere Partikel von der Bürste 8 zu entfernen sind. Andere Variationen der Position und/oder der Drehzahl des Bürstenabstreifers 10 sind indes möglich.

Um ein Zurückspritzen der von der Bürste 8 gelösten Partikel auf das Filterband 3 zu verhindern, ist in der Nähe der Bürste 8 eine Prallfläche 39 beispielsweise in Form eines Prallblechs vorgesehen, die die Bürste 8 zu einem der Bürste 8 benachbarten Filterbandabschnitt, insbesondere dem auf der Stromabseite der Bürste 8 befindlichen Filterbandabschnitt, abschirmt, vgl. Fig. 6.

In dem Aufgabebereich 5 des Filterbandes 3 ist zwischen dessen Obertrum 3a und dessen Untertrum 3b eine Ableitfläche 18 vorgesehen, die in Form eines Ableitblechs ausgebildet sein kann, welches sich zwischen Ober- und Untertrum erstreckt und verhindert, dass durch das Obertrum durchgesickerte Prozesswasser auch durch das Untertrum hindurchtritt. Dieses unterhalb des Aufgabebereichs 5 befindliche Ableitblech kann in vorteilhafter Weiterbildung der Erfindung in Achsrichtung, d.h. in Förderrichtung des Filterbands 3 mittig gekantet sein und/oder nach Art eines Satteldachs V-förmige Konturierung besitzen, um die Flüssigkeit zu beiden Seiten hin gleichmäßig abzuleiten. Dabei können auf der Ableitfläche 18 sich quer zur Förderrichtung des Filterbands 3 erstreckende Stromrichtungselemente in Form von Leisten oder Stegen vorgesehen sein, um die aufgefangene Flüssigkeit definiert seitlich abzuleiten. Durch die genannte Ableitfläche 18 wird gewährleistet, dass der Leertrum des Filterbandes 3 nicht kontaminiert wird und somit auch die Umlenkwalzen 16 und 17 nicht verunreinigt werden.

In Weiterbildung der Erfindung kann an der genannten Ableitfläche 18 eine Bandführungsvorrichtung vorgesehen sein, beispielsweise in Form von Bandführungsleisten, die die seitlichen Ränder des Filterbands 8 umgreifen bzw. überdecken. Vorteilhafterweise sind die genannten Bandführungsleisten zweischenklig beispielsweise in L-Form ausgebildet, so dass die Ränder des Filterbands daran anstehen bzw. aufliegen können und der Aufgabebereich seitlich begrenzt wird, um ein Überlaufen bzw. Überströmen der zu filtrierenden Flüssigkeit über die Ränder des Filterbandes zu verhindern. Gleichzeitig verhindern die genannten Bandführungsleisten ein Abknicken bzw. Herunterfallen der Filterbandkante im Bereich der Flüssigkeitsaufgabe.

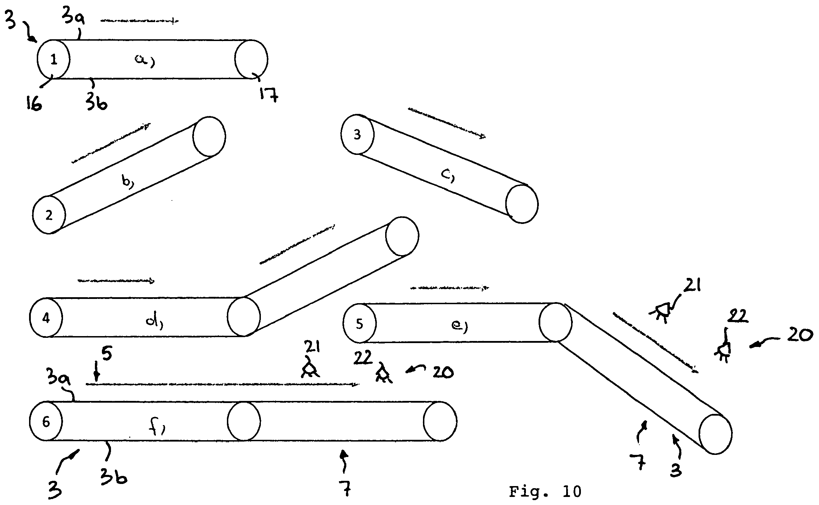

Wie Fig. 10 zeigt, kann das endlos umlaufende Filterband 3 verschiedene Förderwege und Ausrichtungen einnehmen. Die in Fig. 10 mit a) gekennzeichnete Ausführung des umlaufenden Filterbandes 3 in liegender Ausführung entspricht der in den vorangehenden Figuren gezeigten Ausführung. Alternativ hierzu kann das Filterband 3 jedoch auch gemäß b) eine vom Aufgabebereich 5 aus leicht ansteigende Förderbahn bilden bzw. Ausrichtung besitzen, oder gemäß c) eine vom Aufgabebereich 5 aus leicht abfallende Förderbahn bilden bzw. Ausrichtung besitzen.

Ferner kann das Filterband 3 zueinander abgeknickte Förderwege durchlaufen, die durch mehr als zwei Umlenkrollen realisiert werden können. Beispielsweise kann der außerhalb des Filtergehäuses 2 befindliche Teil des Filterbandes 3 einen leicht spitzwinklig geneigten Anstieg durchlaufen, wie dies die Darstellung d) von Fig. 10 zeigt, oder alternativ einen leicht abfallenden Förderweg durchlaufen, wie dies die Darstellung e) der Fig. 10 zeigt.

Gemäß der Darstellung f) kann der außerhalb des Filtergehäuses 2 vorgesehene Förderweg des Filterbands 3 auch einfach nur verlängert sein, beispielsweise um zusätzliche Behandlungsstationen für das ausfiltrierte Prozessgut vorsehen zu können. Insbesondere kann zwischen dem Aufgabebereich 5 und dem Abwurfbereich 7 eine Trocknungsvorrichtung 20 vorgesehen sein, mittels derer der Feuchtigkeitsgehalt der auf dem Filterband 3 anhaftenden Feststoffe reduziert werden kann. Eine derartige Trocknungsvorrichtung 20 kann beispielsweise Energiestrahler 21 in Form von Infrarot-Strahlern, aber auch einen Luftstromerzeuger 22 beispielsweise in Form eines Gebläses oder eines Saugers umfassen, um die Feststoffe mit Trocknungsluft zu beaufschlagen. Alternativ oder zusätzlich können auch andere Trocknungsmittel wie beispielsweise ein Zyklonenabscheider, eine Vakuumpumpe oder ein Heizstrahler Verwendung finden.

## Patentansprüche

1. Filtrationsvorrichtung zum Ausfiltrieren und Separieren von Feststoffen aus Flüssigkeiten, mit zumindest einem flüssigkeitsdurchlässigen, kontinuierlich oder intermittierend antreibbaren Filterband (3), einem Einlauf (4) zur Aufgabe des zu filtrierenden Flüssigkeits-/Feststoffgemischs auf das Filterband (3) in einem Aufgabebereich (5), sowie einem Bandreiniger (6) zur Entfernung der am Filterband angelagerten Feststoffe von einem aus dem Aufgabebereich (5) herausgeförderten Bandabschnitt in einem Abwurfbereich (7), wobei der Bandreiniger (6) eine Bürste (8) aufweist, der ein Bürstenreiniger (9) mit einem Abstreifer (10) zugeordnet ist, der in der Umlaufbahn des Borstenfelds der Bürste (8) angeordnet ist, wobei der Abstreifer (10) des Bürstenreinigers (9) als stabförmige Rakel ausgebildet ist, **dadurch gekennzeichnet, dass** die Bürste (8) rotierend antreibbar ausgebildet ist und die Rakel vollständig in das Borstenfeld eintauchend gehalten ist, wobei der Abstreifer (10) auf einer dem Filterband (3) abgewandten Seite der Bürste (8) angeordnet ist, wobei die Position des Abstreifers (10) relativ zur Bürste (8) und zum Filterband (3) in einem Winkelbereich von zumindest 90° bis 270° verstellbar ist, wenn mit 0° die senkrecht auf das Filterband (3) stehende Richtung angegeben ist.

2. Filtrationsvorrichtung nach dem vorhergehenden Anspruch, wobei die Rakel einen von der Kreisform abweichenden Querschnitt besitzt und um eine Rakeldrehachse (11) im Wesentlichen parallel zur Bürstendrehachse (37) antreibbar ausgebildet ist.

3. Filtrationsvorrichtung nach einem der vorhergehenden Ansprüche, wobei die Position des Abstreifers (10) relativ zur Bürste (8) und zum Filterband (3) in einem Winkelbereich von 150° bis 210° verstellbar ist.

4. Filtrationsvorrichtung nach einem der vorhergehenden Ansprüche, wobei die Bürste (8) mit einer gegenüber der Filterbandgeschwindigkeit veränderbaren Drehgeschwindigkeit antreibbar ist und eine Steuervorrichtung zur automatischen Einstellung der Bürstendrehzahl in Abhängigkeit eines Betriebsparameters, insbesondere der Filterbeladung, des Feststoffmaterials und/oder der Partikelgröße, vorgesehen ist.

5. Filtrationsvorrichtung nach einem der vorhergehenden Ansprüche, wobei der Anpressdruck der Bürste (8) gegen das Filterband (3) durch Verstellbarkeit des Abstands der Bürstendrehachse von dem Filterband einstellbar ist, und eine Steuervorrichtung zur automatischen Einstellung des Anpressdrucks der Bürste (8) in Abhängigkeit der Filterbeladung vorgesehen ist.

6. Filtrationsvorrichtung nach einem der vorhergehenden Ansprüche, wobei die Bürste (8) mit einer Unterseite eines Untertrums des Filterbands (3) in Eingriff steht.

7. Filtrationsvorrichtung nach einem der vorhergehenden Ansprüche, wobei das antreibbare Filterband (3) mit dem Bandreiniger (6) zu einer schubladenförmigen Baugruppe zusammengefasst ist, die vom Einlauf (4) separat ausgebildet und gegenüber dem Einlauf (4) verfahrbar ist, wobei der Einlauf (4) in einem Filtergehäuse (2) angeordnet ist, in das ein Abschnitt des Filterbands (3) durch Verfahren der genannten Baugruppe schubladenförmig einfahrbar ist.

8. Filtrationsvorrichtung nach dem vorhergehenden Anspruch, wobei die genannte Baugruppe einen Wagen bildet, der durch ein Fahrwerk (13) am Boden abgestützt und/oder durch eine Schiebeführung (14) am Filtergehäuse (2) verschieblich geführt ist.

9. Filtrationsvorrichtung nach einem der beiden vorhergehenden Ansprüche, wobei die genannte schubladenförmige Baugruppe einen das Filterband (3) umgebenden Anschlusskragen (15) aufweist, der mit dem Filtergehäuse (2) verbindbar, vorzugsweise flüssigkeits- und/oder gasdicht verbindbar, ist, so dass ein Teil der schubladenförmigen Baugruppe im Inneren des Filtergehäuses (2) und der restliche Teil der Baugruppe umfassend den Bandreiniger (6) und den Abwurfbereich (7) außerhalb des Filtergehäuses (2) angeordnet ist.

10. Filtrationsvorrichtung nach einem der vorhergehenden Ansprüche, wobei das genannte Filterband (3) als um Umlenkrollen (16, 17) umlaufender Bandförderer mit einem Obertrum (3a) und einem Untertrum (3b) ausgebildet ist, wobei in einem im Aufgabebereich (5) liegenden Abschnitt des Bandförderers zwischen dem Obertrum (3a) und dem Untertrum (3b) eine Ableitfläche (18) zur Ableitung von durch den Obertrum (3a) gefilterter Flüssigkeit am Untertrum (3b) vorbei vorgesehen ist, wobei die genannte Ableitfläche (18) eine satteldachförmige Konturierung besitzt, deren First im Wesentlichen parallel zur Laufrichtung des Filterbands (3) ausgerichtet und zum Obertrum (3a) hin orientiert ist.

11. Filtrationsvorrichtung nach dem vorhergehenden Anspruch, wobei an der genannten Ableitfläche (18) Bandführungselemente vorzugsweise in Form von Bandführungsleisten vorgesehen sind, die den Obertrum (3a) des Filterbands (3) an dessen seitlichen Rändern umgreifen oder überdecken und den Aufgabebereich (5) seitlich begrenzen.

12. Filtrationsvorrichtung nach einem der vorhergehenden Ansprüche, wobei dem Filterband (3) zwischen dem Aufgabebereich (5) und dem Abwurfbereich (7) eine Trocknungsvorrichtung (20) zur Trocknung der am Filterband (3) angelagerten Feststoffe zugeordnet ist.

13. Filtrationsvorrichtung nach dem vorhergehenden Anspruch, wobei die Trocknungsvorrichtung (20) zumindest einen Energiestrahler (21), vorzugsweise Infrarotstrahler, zur Beaufschlagung der angelagerten Feststoffe mit Strahlungsenergie und/oder zumindest einen Luftstromerzeuger (22), vorzugsweise in Form eines Gebläses oder eines Saugers, zur Beaufschlagung der angelagerten Feststoffe mit einem Trockenluftstrom aufweist.

14. Filtrationsvorrichtung nach einem der vorhergehenden Ansprüche, wobei eine Steuervorrichtung zur automatischen Einstellung der Filterbandgeschwindigkeit in Abhängigkeit eines Betriebsparameters, insbesondere des Verhältnisses von Flüssigkeitsmenge zu Feststoffmenge im zu filtrierenden Flüssigkeits-/Feststoffgemisch, der Filterbeladung, des Feststoffmaterials und/oder der Partikelgröße, vorgesehen ist.

## Claims

1. A filtration apparatus for filtering and separating solids from liquids, comprising at least one liquid-permeable, continuously or intermittently drivable filter belt (3), an intake (4) for charging the liquid/solid mixture to be filtered onto the filter belt (3) in a charging zone (5) as well as a belt cleaner (6) for removing the solids deposited at the filter belt from a belt section conveyed out of the charging zone (5) in an expulsion zone (7), wherein the belt cleaner (6) has a brush (8) with which a brush cleaner (9) having a scraper (10) is associated which is arranged in the revolving path of the bristle field of the brush (8), wherein the scraper (10) of the brush cleaner (9) is formed as a bar-shaped wiper, **characterized in that** the brush (8) is configured as rotatingly drivable and the wiper is held completely immiscible into the bristle field, wherein the scraper (10) is arranged on a side of the brush (8) remote from the filter belt (3), wherein the position of the scraper (10) relative to the brush (8) und to the filter belt (3) can be adjusted in an angular range of at least 90° to 270°, when the direction standing perpendicular on the filter belt (3) is given as 0°.

2. A filtration apparatus in accordance with the preceding claim, wherein the wiper has a cross-section differing from the circular and is formed drivable about a rotational axis (11) of the wiper substantially parallel to the rotational axis (37) of the brush.

3. A filtration apparatus in accordance with one of the preceding claims, wherein the position of the scraper (10) relative to the brush (8) und to the filter belt (3) can be adjusted in an angular range from 150° to 210°.

4. A filtration apparatus in accordance with one of the preceding claims, wherein the brush (8) can be driven at a rotational speed variable with respect to the filter belt speed and a control apparatus is provided for the automatic setting of the brush speed in dependence on an operating parameter, in particular on the filter load, on the solid material and/or on the particle size.

5. A filtration apparatus in accordance with one of the preceding claims, wherein the contact pressure of the brush (8) against the filter belt (3) can be set by adjustability of the spacing of the axis of rotation of the brush from the filter belt, and a control apparatus is provided for the automatic setting of the contact pressure of the brush (8) in dependence on the filter load.

6. A filtration apparatus in accordance with one of the preceding claims, wherein the brush (8) is in engagement with a lower side of a lower run of the filter belt (3).

7. A filtration apparatus in accordance with one of the preceding claims, wherein the drivable filter belt (3) is combined with the belt cleaner (6) to form a drawer-like assembly which is made separately from the intake (4) and is movable with respect to the intake (4), wherein the intake (4) is arranged in a filter housing (2) into which a section of the filter belt (3) can be moved by moving the named assembly in the manner of a drawer.

8. A filtration apparatus in accordance with the preceding claim, wherein the named assembly forms a trolley which is supported on the floor by an undercarriage (13) and/or is displaceably guided by a sliding guide (14) at the filter housing (2).

9. A filtration apparatus in accordance with one of the two preceding claims, wherein the named drawer-like assembly has a connector collar (15) surrounding the filter belt (3) which is connectable to the filter housing (2), preferably connectable in a liquid-tight and/or gas-tight manner, so that a part of the drawer-like assembly is arranged in the interior of the filter housing (2) and the remaining part of the assembly comprising the belt cleaner (6) and the expulsion zone (7) is arranged outside the filter housing (2).

10. A filtration apparatus in accordance with one of the preceding claims, wherein the named filter belt (3) is made as a belt conveyor revolving around deflection rollers (16, 17) and having an upper run (3a) and a lower run (3b), wherein a lead-off surface (18) is provided in a section of the belt conveyor disposed in the charging zone (5) between the upper run (3a) and the lower run (3b) for leading off liquid filtered through the upper run (3a) past the lower run (3b), wherein the named lead-off surface (18) has a saddle-roof-like contour whose ridge is aligned substantially parallel to the running direction of the filter belt (3) and is oriented toward the upper run (3a).

11. A filtration apparatus in accordance with the preceding claim, wherein belt guiding elements are provided at the named lead-off surface (18), preferably in the form of belt guiding rails, which engage around or cover the upper run (3a) of the filter belt (3) at its lateral margins and laterally bound the charging zone (5).

12. A filtration apparatus in accordance with one of the preceding claims, wherein a drying apparatus (20) for drying the solids deposited at the filter belt (3) is associated with the filter belt (3) between the charging zone (5) and the expulsion zone (7).

13. A filtration apparatus in accordance with the preceding claim, wherein the drying apparatus (20) has at least one energy radiator (21), preferably an infrared radiator, for applying radiation energy to the deposited solids and/or has at least one air flow generator (22), preferably in the form of a fan or of a suction device, for applying a dry air flow to the deposited solids.

14. A filtration apparatus in accordance with one of the preceding claims, wherein a control apparatus is provided for the automatic setting of the filter belt speed in dependence on an operating parameter, in particular on the ratio of liquid quantity to solid quantity in the liquid/solid mixture to be filtered, on the filter load, on the solid material and/or on the particle size.

## Revendications

1. Dispositif de filtration destiné à filtrer et séparer des matières solides de liquides, comprenant au moins une bande de filtration (3) perméable aux liquides pouvant être entraînée de manière continue ou discontinue, une entrée (4) destinée à alimenter le mélange liquide/solide à filtrer sur la bande de filtration (3) dans une zone d'alimentation (5), ainsi qu'un nettoyeur de bande (6) destiné à retirer les matières solides fixées sur la bande de filtration d'une partie de bande transportée hors de la zone d'alimentation (5) dans une zone de décharge (7), le nettoyeur de bande (6) comportant une brosse (8), à laquelle est associé un nettoyeur de brosse (9) doté d'un racleur (10), qui est disposé dans la trajectoire circulaire de la zone de poils de la brosse (8), le racleur (10) du nettoyeur de brosse (9) étant formé en tant que racloir en forme de barre, **caractérisé en ce que** la brosse (8) est formée de manière pouvant être entraînée en rotation et le racloir est maintenu entièrement enfoui dans la zone de poils, le racleur (10) étant disposé sur un côté de la brosse (8) opposé à la bande de filtration (3), la position du racleur (10) par rapport à la brosse (8) et à la bande de filtration (3) pouvant être réglée dans une plage angulaire d'au moins 90° à 270°, quand 0° indique la direction verticale perpendiculaire à la bande de filtration (3).

2. Dispositif de filtration selon la revendication précédente, dans lequel le racloir possède une section transversale de forme autre que circulaire et est formé de manière à pouvoir être entraîné autour d'un axe de rotation de racloir (11) sensiblement parallèlement à l'axe de rotation de la brosse (37).

3. Dispositif de filtration selon l'une des revendications précédentes, dans lequel la position du racleur (10) par rapport à la brosse (8) et à la bande de filtration (3) est réglable dans une plage angulaire de 150° à 210°.

4. Dispositif de filtration selon l'une des revendications précédentes, dans lequel la brosse (8) peut être entraînée avec une vitesse de rotation variable par rapport à la vitesse de la bande de filtration et un dispositif de commande est prévu pour le réglage automatique de la vitesse de rotation de la brosse en fonction d'un paramètre de fonctionnement, en particulier de la charge du filtre, de la matière solide et/ou de la taille de particule.

5. Dispositif de filtration selon l'une des revendications précédentes, dans lequel la pression d'appui de la brosse (8) contre la bande de filtration (3) est réglable grâce à la possibilité de régler l'écart entre l'axe de rotation de la brosse et la bande de filtration, et un dispositif de commande est prévu pour le réglage automatique de la pression d'appui de la brosse (8) en fonction de la charge du filtre.

6. Dispositif de filtration selon l'une des revendications précédentes, dans lequel la brosse (8) est en prise avec une face inférieure d'un brin inférieur de la bande de filtration (3).

7. Dispositif de filtration selon l'une des revendications précédentes, dans lequel la bande de filtration (3) pouvant être entraînée est groupée avec le nettoyeur de bande (6) en un ensemble en forme de tiroir, qui est formé séparément de l'entrée (4) et déplaçable par rapport à l'entrée (4), l'entrée (4) étant disposée dans un boîtier de filtre (2), dans lequel une partie de la bande de filtration (3) peut être introduite à la manière d'un tiroir par déplacement dudit ensemble.

8. Dispositif de filtration selon la revendication précédente, dans lequel ledit ensemble forme un chariot, qui est supporté sur le sol par un mécanisme de déplacement (13) et/ou qui est guidé de manière déplaçable par un guidage coulissant (14) sur le boîtier de filtre (2).

9. Dispositif de filtration selon l'une des deux revendications précédentes, dans lequel ledit ensemble en forme de tiroir comporte une collerette de raccordement (15) entourant la bande de filtration (3), la collerette de raccordement pouvant être reliée au boîtier de filtre (2), de préférence reliée de manière étanche aux liquides et/ou aux gaz, de telle manière qu'une partie de l'ensemble en forme de tiroir est disposée à l'intérieur du boîtier de filtre (2) et la partie restante de l'ensemble comprenant le nettoyeur de bande (6) et la zone de décharge (7) est disposée à l'extérieur du boîtier de filtre (2).

10. Dispositif de filtration selon l'une des revendications précédentes, dans lequel ladite bande de filtration (3) est formée en tant que bande transporteuse tournant autour de poulies de renvoi (16, 17), comprenant un brin supérieur (3a) et un brin inférieur (3b), une surface de déviation (18) étant prévue dans une partie de la bande transporteuse située dans la zone d'alimentation (5) entre le brin supérieur (3a) et le brin inférieur (3b) pour la déviation de liquide filtré par le brin supérieur (3a) à côté du brin inférieur (3b), ladite surface de déviation (18) possédant un contour en forme de toit à deux versants, dont le faîte est orienté sensiblement parallèlement au sens de déplacement de la bande de filtration (3) et est orienté vers le brin supérieur (3a).

11. Dispositif de filtration selon la revendication précédente, dans lequel des éléments de guidage de bande, de préférence sous la forme de glissières de guidage de bande, sont prévus sur ladite surface de déviation (18), lesquels enveloppent ou recouvrent le brin supérieur (3a) de la bande de filtration (3) au niveau de ses bords latéraux et limitent latéralement la zone d'alimentation (5).

12. Dispositif de filtration selon l'une des revendications précédentes, dans lequel un dispositif de séchage (20) destiné au séchage des matières solides fixées sur la bande de filtration (3) est associé à la bande de filtration (3) entre la zone d'alimentation (5) et la zone de décharge (7).

13. Dispositif de filtration selon la revendication précédente, dans lequel le dispositif de séchage (20) comporte au moins un émetteur de rayonnement énergétique (21 ), de préférence un émetteur de rayonnement infrarouge, destiné à soumettre les matières solides fixées à l'action d'une énergie rayonnante, et/ou au moins un générateur de flux d'air (22), de préférence sous la forme d'une soufflante ou d'un dispositif aspirant, destiné à soumettre les matières solides fixées à l'action d'un flux d'air sec.

14. Dispositif de filtration selon l'une des revendications précédentes, dans lequel un dispositif de commande est prévu pour le réglage automatique de la vitesse de la bande de filtration en fonction d'un paramètre de fonctionnement, en particulier du rapport entre la quantité de liquide et la quantité de matière solide dans le mélange liquide/solide à filtrer, de la charge du filtre, de la matière solide et/ou de la taille de particule.
